# FASCICULE DE BREVET EUROPEEN

(11) **EP 2 347 666 B1**
(45) Date de publication et mention de la délivrance du brevet: **13.12.2017**
(21) Numéro de dépôt: 11000015.5
(22) Date de dépôt: 03.01.2011
(51) Int. Cl.: A43B 5/04, A43B 13/12, A43B 13/14, B29D 35/14, A43B 13/02

(54) **Chaussure à semelage amélioré**
Schuh mit verbesserter Sohle
Shoe with improved bottom assembly

(30) Priorité: 25.01.2010 FR 1000266
(43) Date de publication de la demande: 27.07.2011
(73) Titulaire: SALOMON S.A.S., 74370 Metz-Tessy (FR)
(72) Inventeur: Miette, Philippe, 74940 Annecy Le Vieux (FR)

(56) Documents cités:
- EP-A1- 1 210 883
- US-A- 3 807 062
- US-A- 4 186 500
- US-A- 5 077 916
- US-A- 5 938 228
- US-A1- 2005 178 024
- US-A1- 2007 209 230
- US-A1- 2009 293 315

## Description

L'invention se rapporte à une chaussure, notamment de sport, et concerne plus particulièrement une chaussure destinée à la pratique du ski, de la marche sportive, ou de l'athlétisme.

De telles chaussures peuvent être utilisées dans des domaines tels que le ski de fond ou de télémark, la marche ou la course à plat ou en montagne, l'alpinisme ou encore le surf sur neige, la raquette à neige, le patin à roues, le cyclisme, un sport de balle, ou autre.

Une chaussure peut comprendre une tige basse ou une tige haute, et peut être relativement souple ou au contraire plus rigide. La chaussure est dans tous les cas munie d'un semelage externe, lequel est prévu pour relier la tige au sol ou à un engin de sport.

De manière connue le semelage externe peut être réalisé avec une matière synthétique, telle qu'une matière plastique, moulée ou mise en forme par toute technique. Le semelage externe est donc une pièce qui s'étend en longueur depuis une extrémité arrière jusqu'à une extrémité avant, en largeur entre un côté latéral et un côté médial, et en hauteur entre une face libre, prévue pour contacter le sol ou l'engin de sport, et une face de liaison, prévue pour être solidarisée à la tige.

Cette pièce présente l'avantage d'être facile à fabriquer. Cependant l'emploi d'une seule matière ne permet pas d'optimiser les propriétés mécaniques de chaque subdivision du semelage externe. En effet des zones différentes sont soumises à des contraintes de natures différentes. Par exemple certaines zones travaillent beaucoup en fatigue, comme celle située à la limite entre les orteils et le métatarse. C'est là que les flexions répétées du pied provoquent des flexions répétées du semelage. D'autres zones travaillent par exemple en compression, ou en frottement, comme par exemple la zone du talon. D'autres zones encore peuvent absorber des sollicitations de conduite spécifiques. C'est notamment le cas en ski de fond, où le semelage externe comprend un ou plusieurs organes de liaison, prévus chacun pour une liaison réversible de la chaussure à un dispositif de retenue lui-même associé au ski.

Toujours de manière connue, il a donc été prévu l'emploi de plusieurs matières synthétiques pour la réalisation d'un semelage externe. Cela avec l'idée sous-jacente d'optimiser les propriétés mécaniques d'au moins certaines subdivisions du semelage externe.

Par exemple la partie principale, ou âme, du semelage externe, est couverte au niveau du talon, et du côté de la face libre, par une ou plusieurs parcelles de matière synthétique résistant à l'usure.

On observe aussi des bandes appliquées dans la zone de flexion, c'est-à-dire entre les orteils et le métatarse. Les bandes sont faites d'un matériau différent de celui de l'âme.

On observe encore des subdivisions faites de matières plastiques différentes, selon qu'elles comprennent ou non un organe de liaison à un dispositif de retenue.

D'une manière générale les semelages externes connus, faits de plusieurs matières synthétiques, présentent encore certains inconvénients.

Tout d'abord leurs propriétés mécaniques ne sont pas optimisées dans toutes leurs subdivisions. Pour les chaussures techniques avec semelage rigide, on observe par exemple que les bords du semelage ne sont pas assez souples et que, de ce fait, ils n'épousent pas suffisamment la forme de la tige lors du collage de celle-ci sur le semelage. Cela rend le collage difficile. On observe aussi que certaines régions plus centrales du semelage ne sont pas suffisamment raides pour transmettre les impulsions de conduite avec précision. Encore, la résistance en fatigue, liée aux flexions répétées, est parfois insuffisante.

Ensuite il apparaît que lorsque la structure mécanique est suffisamment résistante, elle est aussi assez compliquée. C'est notamment le cas en ski de fond où un organe de liaison à la fixation est solidarisé au reste du semelage par l'intermédiaire de plusieurs pièces. Cela permet la solidarisation fiable de l'organe, en augmentant cependant la complexité de structure et le coût de fabrication.

Il apparaît encore que, sur les semelages connus, des amorces de séparation ou des ruptures se produisent à la jonction de matières différentes. En d'autres termes, les semelages externes connus sont parfois fragiles.

De plus, les semelages comprenant plusieurs matières différentes sont parfois assez lourds.

Une chaussure présentant les caractéristiques du préambule de la revendication 1 est connue du document EP 1 210 883.

Par rapport à tout cela l'invention cherche à améliorer une chaussure, notamment au niveau de son semelage externe. Plus précisément l'invention veut optimiser les propriétés mécaniques des subdivisions du semelage externe. L'invention souhaite aussi simplifier la structure du semelage. L'invention veut encore accroître la résistance mécanique du semelage, et augmenter sa durée de vie. Un but également de l'invention est d'alléger autant que possible le semelage, notamment dans la partie externe. Un but encore est d'améliorer le collage du semelage sur la tige de la chaussure.

Pour ce faire l'invention propose une chaussure comprenant un semelage externe, le semelage externe s'étendant en longueur depuis une extrémité arrière jusqu'à une extrémité avant, en largeur entre un côté latéral et un côté médial, et en hauteur entre une face libre et une face de liaison, le semelage externe comprenant une âme en un premier matériau.

La chaussure selon l'invention est caractérisée par le fait que l'âme du semelage externe comprend une plaque qui délimite la face de liaison, ainsi qu'au moins un bossage qui fait saillie depuis la plaque vers la face libre, et par le fait que le semelage externe comprend une couverture en un deuxième matériau, la couverture délimitant en partie au moins la face libre, la couverture couvrant en partie au moins la plaque et en partie au moins un bossage.

Dans l'invention l'âme et la couverture sont constituées respectivement de matériaux légèrement, voire très, différents. Cela signifie qu'ils présentent une ou plusieurs propriétés ou caractéristiques différentes, comme par exemple la dureté ou la rigidité.

Par la précision de recouvrement des bossages par le deuxième matériau, l'invention augmente la surface de solidarisation entre l'âme et la couverture. Cela par rapport à l'art antérieur, où les surfaces de solidarisation sont planes. On peut dire que dans l'invention la surface de contact entre l'âme et la couverture est essentiellement tridimensionnelle. Cet agencement augmente la résistance mécanique qui lie l'âme à la couverture. Par corollaire, les contraintes à la frontière de l'une avec l'autre sont réduites.

Il est donc avantageusement possible de conférer à l'âme et à la couverture des formes qui optimisent les propriétés mécaniques du semelage dans toutes ses subdivisions. Ainsi les bords sont choisis souples pour mieux épouser la périphérie de la tige. Des parties centrales du semelage sont plus raides pour transmettre les impulsions de conduite. La portion entre les orteils et le métatarse est dimensionnée pour résister à la fatigue en flexion. Avantageusement l'âme est faite d'un matériau suffisamment résistant, d'un point de vue mécanique, pour l'ancrage d'un organe de liaison.

Un autre avantage est celui de la simplicité de structure, dans le sens où un organe de liaison peut être solidarisé directement au reste du semelage.

Un avantage encore du semelage selon l'invention est une solidité accrue, ce bien sûr par rapport à un semelage connu subissant des contraintes du même ordre, et présentant des dimensions similaires.

Il apparaît également que le semelage de l'invention est très léger, par rapport à ses dimensions et à sa résistance mécanique.

D'une manière globale il apparaît que, notamment par un meilleur compromis de ses caractéristiques, l'invention améliore le semelage externe d'une chaussure.

D'autres caractéristiques et avantages de l'invention seront mieux compris à l'aide de la description qui va suivre, en regard du dessin annexé illustrant, selon une forme de réalisation non limitative, comment l'invention peut être réalisée, et dans lequel :
- la figure 1 est une vue en perspective avant, côté semelle, d'une chaussure selon la forme de réalisation proposée pour l'invention,
- la figure 2 montre une âme du semelage externe de la chaussure de la figure 1, vue du côté de la face libre du semelage,
- la figure 3 est une coupe selon III-III de la figure 2,
- la figure 4 est une coupe transversale à la fois d'un moule et selon IV-IV de la figure 2, pour la fabrication de l'âme du semelage,
- la figure 5 est une coupe transversale d'un moule, pour la solidarisation de la couverture du semelage à l'âme,
- la figure 6 est une vue du semelage externe, du côté de sa face de liaison au reste de la chaussure,
- la figure 7 est une coupe selon VII-VII de la figure 6,
- la figure 8 est une coupe selon VIII-VIII de la figure 6,
- la figure 9 est une coupe selon IX-IX de la figure 6,
- la figure 10 montre la solidarisation du semelage externe au reste de la chaussure.

La forme de réalisation qui va être décrite après concerne plus spécialement des chaussures pour la pratique du ski de fond, de la randonnée à ski, ou du télémark. Cependant l'invention s'applique à d'autres domaines tels que ceux évoqués avant.

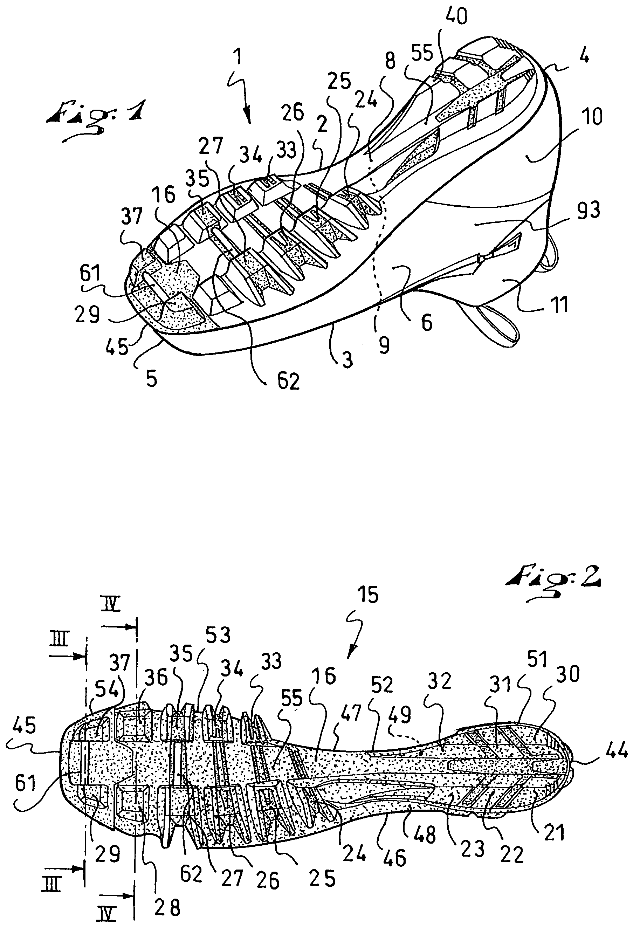

Une chaussure 1 visible sur la figure 1 a vocation à accueillir le pied de l'utilisateur.

De manière connue, la chaussure 1 comprend un semelage externe 2 et une tige 3. La chaussure 1 s'étend en longueur depuis une extrémité arrière ou talon 4 jusqu'à une extrémité avant ou pointe 5, et en largeur entre un côté latéral 6 et un côté médial 7. On observe que par corollaire le semelage externe 2 s'étend en longueur depuis le talon 4 jusqu'à la pointe 5, et en largeur entre le côté latéral 6 et le côté médial 7. Le semelage 2 s'étend aussi en hauteur, ou en épaisseur, entre une face libre 8 et une face de liaison 9. Bien entendu la face libre 8 est destinée à contacter le sol, un dispositif de retenue de la chaussure à un engin de sport, ou encore l'engin lui-même. La face de liaison 9, quant à elle, sert à solidariser le semelage 2 au reste de la chaussure, par exemple par collage.

Telle que représentée la tige 3 comprend une portion basse 10, prévue pour entourer le pied, ainsi qu'une portion haute 11, prévue pour entourer la cheville. Cependant, il pourrait être envisagé une tige comprenant seulement la portion basse.

La présentation générale de la chaussure étant faite, l'attention va être portée maintenant sur le semelage 2. Ce dernier comprend une âme 15, faite d'un premier matériau assez dur, représentée à l'aide de nuages de points. Cela lui donne un aspect grisâtre, distinctif d'autres éléments du dessin.

Selon l'invention, l'âme 15 du semelage externe 2 comprend une plaque 16 qui délimite la face de liaison 9, ainsi qu'au moins un bossage 21 - 37 qui fait saillie depuis la plaque 16 vers la face libre 8. Le semelage externe 2 de la chaussure comprend encore une couverture 40 en un deuxième matériau moins dur, la couverture délimitant en partie au moins la face libre 8, la couverture 40 couvrant en partie au moins la plaque 16 et en partie au moins un bossage 21 - 37. En d'autres termes le semelage externe 2 est constitué notamment par l'association de l'âme 15 avec la couverture 40, lesquelles sont faites en matériaux décrits plus en détail après. On verra mieux par la suite que la couverture 40 est solidarisée à l'âme 15 par un moyen de collage, de soudage, ou tout équivalent. En conséquence l'association de l'âme 15 avec la couverture est tridimensionnelle, et permanente. Cela confère à chaque subdivision du semelage 2 les propriétés mécaniques adaptées aux fonctions à remplir. Ces points seront soulignés par la suite.

Comme le montre la figure 2, l'âme 15 s'étend en longueur depuis une extrémité arrière 44 jusqu'à une extrémité avant 45, en largeur entre un bord latéral 46 et un bord médial 47, ainsi qu'en hauteur entre une face inférieure 48 et une face supérieure 49. On verra mieux après que la face inférieure 48 est tournée à l'opposé de la tige 3, tandis que la face supérieure 49 est elle tournée vers la tige 3. Plus précisément ici la face supérieure 49 de l'âme 15 est une subdivision de la face de liaison 9 du semelage 2.

En s'appuyant sur les figures 1 et 2, on observe que l'extrémité arrière 4 de la chaussure 1 et l'extrémité arrière 44 de l'âme 15 sont décalées longitudinalement l'une par rapport à l'autre. En pratique l'extrémité 4 est plus en arrière que l'extrémité 44. Par contre vers l'avant l'extrémité éponyme 5 et l'extrémité 45 se confondent. Au total l'âme 15 présente une longueur comprise entre 85 et 100% de la longueur du semelage 2. On a observé qu'une longueur comprise entre 90 et 95% permet une optimisation de la répartition des propriétés mécaniques du semelage 2, comme cela sera expliqué plus loin.

Maintenant, pour expliquer la répartition des bossages 21 à 37, on précise d'abord que le semelage 2 présente quatre zones successives. Il s'agit d'une zone arrière 51, prévue pour venir à la hauteur du talon du pied, d'une zone centrale 52, qui vient à la hauteur de la voûte plantaire, d'une zone de métatarse 53, qui vient à la hauteur du métatarse, puis d'une zone avant 54, à hauteur des orteils.

Les bossages 21 à 37 sont au nombre de neuf vers le bord latéral 46, et au nombre de huit vers le bord médial 47. Bien entendu, cette quantité et cette répartition ne sont pas limitatives. On précise que, ici, la zone arrière 51 comprend trois bossages latéraux 21 à 23 et trois bossages médiaux 30 à 32. La zone centrale 52 est régulière, c'est-à-dire dépourvue de bossage. La zone de métatarse comprend quatre bossages latéraux 24 à 27 et trois bossages médiaux 33 à 35. Enfin la zone avant 54 comprend deux bossages latéraux 28, 29 et deux bossages médiaux 36, 37. La répartition des bossages 21 - 37 délimite, comme on le verra mieux par la suite, une rainure longitudinale centrale 55 du semelage 2. Cette rainure débouche au niveau de la face libre 8, pour coopérer avec l'arête de guidage, non représentée ici, d'un dispositif de retenue de la chaussure 1 sur un ski.

En complément, comme expliqué avec l'ensemble des figures 1 à 3, le semelage 2, et donc la chaussure 1, comprend un premier organe de liaison 61 et un deuxième organe de liaison 62. De manière connue et non développée ici, chaque organe 61, 62 est prévu pour coopérer avec un dispositif de retenue non représenté.

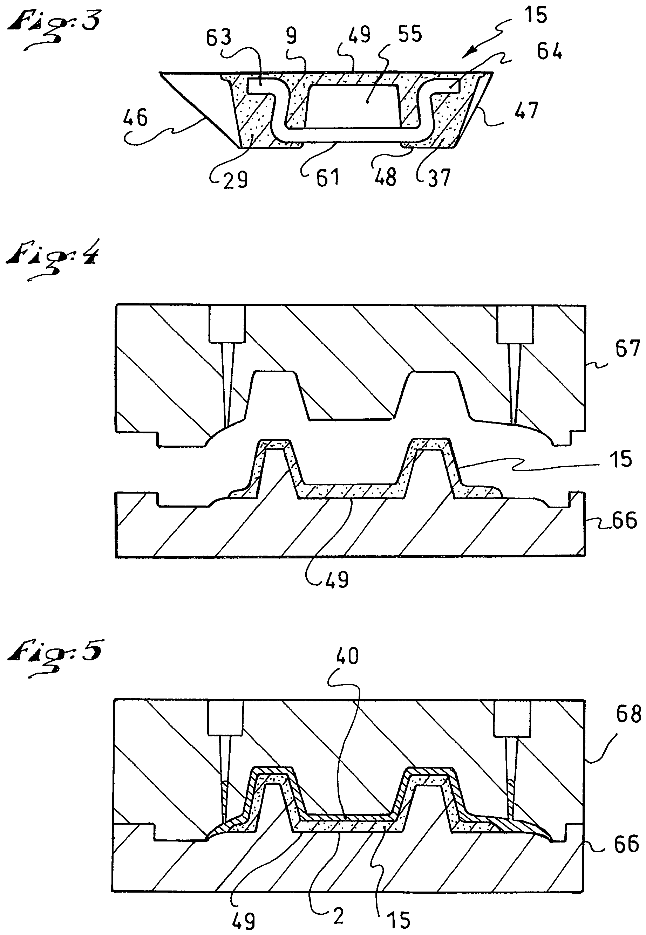

Parce que les organes 61, 62 sont identiques, ou similaires, un seul d'entre-eux, le premier 61, est montré à la figure 3. Chaque organe 61, 62 présente la forme générale d'un oméga. Il est constitué par exemple d'un fil de métal cintré, dont la section est circulaire, avec un diamètre compris entre deux et six millimètres. Par exemple un diamètre de quatre millimètres convient. Chaque extrémité 63, 64 d'un organe 61, 62 est respectivement noyée dans un bossage latéral 27, 29 ou médial 35, 37 de l'âme 15. En fait chaque organe de liaison 61, 62 est ancré dans l'âme 15. Seule la partie intermédiaire de l'organe, entre les extrémités 63, 64, n'est pas encastrée. L'ancrage dans le matériau le plus dur de l'âme est suffisant, et permet d'éviter l'emploi de pièces supplémentaires, comme des têtes surmoulées sur les extrémités 63, 64. Chaque organe de liaison 61, 62 est parallèle à la face supérieure 49, ou de liaison 9, et orienté transversalement dans un sens qui va du bord latéral 46 vers le bord médial 47, c'est-à-dire aussi du côté latéral 6 vers le côté médial 7. Bien entendu, la chaussure 1 peut comprendre seulement un organe.

Un procédé d'obtention du semelage 2 est maintenant décrit à l'aide des figures 4 et 5, afin d'en mieux faire saisir les spécificités structurelles et fonctionnelles.

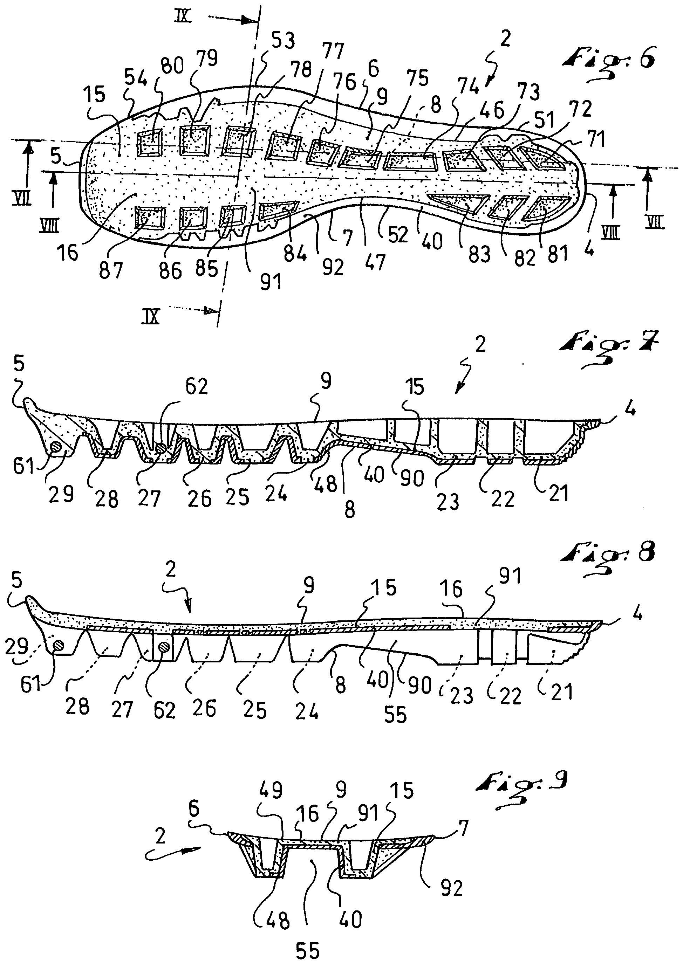

Il est d'abord prévu de fabriquer un ensemble comprenant l'âme 15 et les organes de liaison 61, 62. Pour ce faire, selon la figure 4, un premier moule comprend un bâti 66 et un premier couvercle 67. On verra après que le bâti 66 est une pièce commune à plusieurs moules. Bien entendu les organes 61, 62 sont placés dans le premier moule, puis la matière constitutive de l'âme 15 est introduite dans le moule, par exemple par injection. L'ensemble obtenu est celui des figures 2 et 3. Ensuite, le premier couvercle 67 est remplacé par un deuxième couvercle 68 sur le bâti 66, comme on le comprend avec la figure 5, l'âme 15 et les organes 61, 62 restant en place sur le bâti. Bien entendu, le deuxième couvercle 68 délimite un ou plusieurs espaces entre l'âme 15 et lui-même 68. Ensuite la matière constitutive de la couverture 40 est introduite dans le deuxième moule, par exemple par injection, pour épouser en partie les contours du moule et en partie l'âme 15. En d'autres termes la couverture 40 est moulée directement au contact de l'âme 15. On obtient ainsi le semelage 2 tel que représenté sur les figures 6 à 9. Avant d'en détailler l'agencement, précisons les matériaux qui le constituent.

En fait chacune des pièces que sont l'âme 15 et la couverture 40 est réalisée avec une matière synthétique, telle qu'une matière plastique. Ainsi l'âme 15 et la couverture 40 comprennent chacune une matière telle que du polyamide, du polyuréthane, du polychlorure de vinyle, du polyéthylène, ou autre.

Selon la forme de réalisation décrite, l'âme 15 et la couverture 40 sont constituées par des matières d'un même genre. Cela favorise l'adhérence de l'une sur l'autre au moment de la fabrication. Par exemple, si l'une comprend du polyuréthane, alors l'autre en comprend aussi. Ce qui différencie les deux pièces 15, 40, ce sont leurs duretés respectives. L'âme 15 présente une dureté supérieure à celle de la couverture 40, car le matériau de l'âme 15 présente une dureté supérieure à celle du matériau de la couverture 40. Par exemple, la dureté de l'âme 15 est comprise entre 50 et 80 Shore D, tandis que la dureté de la couverture 40 est comprise entre 25 et 50 Shore D. On a obtenu de bons résultats avec des valeurs allant de 50 à 60 Shore D pour l'âme 15, et de 30 à 40 Shore D pour la couverture.

Le semelage 2 présente des cavités ouvertes 71 à 87, qui débouchent du côté de la face de liaison 9. Les cavités 71 à 87 sont au nombre de dix vers le bord latéral 46 de l'âme 15, et au nombre de sept vers le bord médial 47. Bien entendu, cette quantité et cette répartition ne sont pas limitatives. Par exemple, la zone arrière 51 présente trois cavités latérales 71 à 73 et trois cavités médiales 81 à 83. La zone centrale 52 présente deux cavités latérales 74, 75. La zone de métatarse 53 présente quatre cavités latérales 76 à 79 et trois cavités médiales 84 à 86. Enfin la zone avant 54 présente une cavité latérale 80 et une cavité médiale 87. Les cavités allègent le semelage 2.

On observe que la majorité des cavités 71 à 87 sont disposées dans des bossages 21 à 37. Cependant les deux cavités 74, 75 de la zone centrale sont à hauteur d'une portion régulière 90 de la face libre 8 du semelage 2. A contrario le bossage latéral avant 29 et le bossage médial avant 37 sont pleins.

A propos de ces bossages avant 29, 37, on peut dire qu'ils présentent une bonne résistance à la compression, car ils font partie de l'âme 15, laquelle on l'a vu est plus dure que la couverture 40. Les bossages avant 29, 37 sont nus, c'est-à-dire non couverts par la couverture 40. Ainsi la transmission des efforts et des informations sensorielles est précise à l'avant de la chaussure 1, c'est-à-dire au niveau du premier organe de liaison 61. Celui-ci est en effet directement ancré de manière solide dans l'âme 15.

Dans le même esprit le deuxième organe de liaison 62 est lui aussi ancré dans l'âme 15, au niveau du bossage latéral 27 et du bossage médial 35. La couverture 40 couvre cependant partiellement les bossages 27, 35 de tenue du deuxième organe de liaison 62, pour atténuer l'intensité des efforts et des impulsions. Etant donné que ce second organe 62 est prévu pour rappeler la chaussure vers le ski, comme il est connu et non décrit ici, le rappel est à la fois précis et amorti. Cela apporte du confort à la conduite.

Les bossages avant 28, 36 situés entre les organes de liaison 61, 62 sont chacun évidés pour délimiter une cavité 80, 87 qui débouche du côté de la face de liaison 9. Ces bossages 28, 36 sont aussi totalement couverts par la couverture 40, comme il apparaît sur la figure 7 mais aussi sur la figure 1. Il s'agit d'apporter une tolérance mécanique pour la mise en place de la chaussure 1 sur un dispositif de retenue. En effet, dans ce cas les organes 61, 62 coopèrent avec le dispositif. Assouplir le semelage 2 entre les organes 61, 62, au niveau de la face libre 8, facilite la mise en place de la chaussure sur le dispositif.

Les bossages arrière 21 à 23 et 30 à 32 de la zone arrière 51 sont totalement recouverts par la couverture 40. Cela permet un amortissement des appuis au niveau du talon.

Les autres bossages 24 à 26 et 33, 34 de la zone de métatarse 53 sont partiellement recouverts par la couverture 40. Il s'agit de réaliser un compromis entre précision et amortissement.

On le voit, avec un semelage 2 qui comprend uniquement deux pièces de matière plastique différentes dans leurs duretés respectives, à savoir l'âme 15 et la couverture 40, il est possible d'obtenir une gamme étendue de subdivisions aux rigidités différentes. En d'autres termes, la combinaison des deux matériaux multiplie les caractéristiques mécaniques, dont on peut encore préciser quelques unes.

Entres les bossages 21 à 37 latéraux et médiaux, et donc aussi entre les cavités latérales et médiales 71 à 87, on a vu que s'étend la rainure longitudinale 55. Le long du fond de la rainure 55, et donc le long du semelage 2, s'étend une subdivision longitudinale 91 de la plaque 16 de l'âme 15. A l'instar de cette dernière 15, la subdivision longitudinale 91, appelée bande centrale, présente une longueur comprise entre 85 et 100% de la longueur du semelage 2. De par sa localisation, la bande 91 délimite une partie de la face de liaison 9. Bien entendu cette bande est faite avec celui des matériaux qui présente la dureté la plus élevée. Ainsi, parce qu'ici la subdivision longitudinale 91 ou bande en matériau dur est continue, la transmission d'efforts longitudinaux, par le semelage 2, est précise. Il s'agit par exemple d'une traction exercée par le talon pour soulever le ski. L'effort de traction est transmis directement par la bande 91 aux organes de liaison 61, 62. En conséquence la conduite est plus précise, et les performances sont accrues.

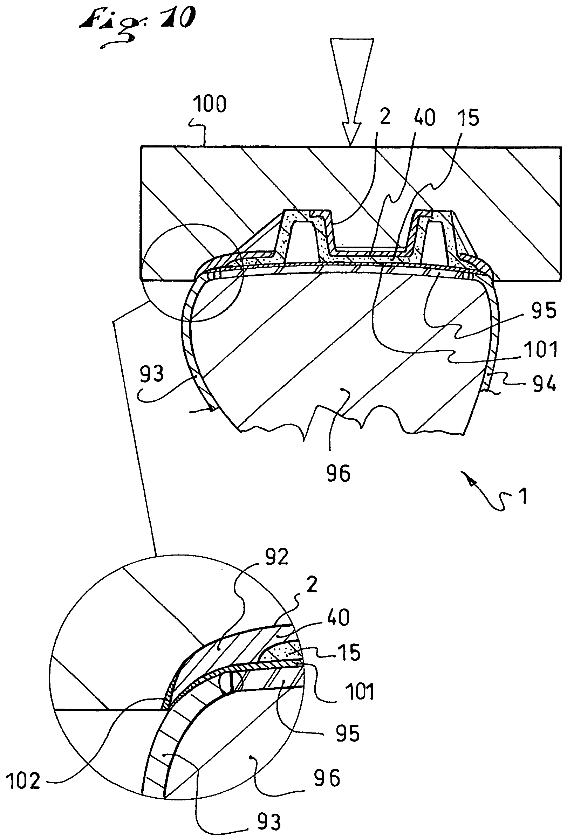

Une autre caractéristique intéressante du semelage externe 2 concerne sa périphérie. Comme on l'observe notamment sur les figures 6 et 9, la couverture 40 s'étend parallèlement à la plaque 16 pour élargir le semelage 2 au niveau du côté latéral 6 et au niveau du côté médial 7, et pour allonger le semelage 2 au niveau de l'extrémité arrière 4. Les élargissements et l'allongement se font dans un plan qui contient la plaque 16. On pourrait dire que la couverture 40 prolonge l'âme 15 au niveau de son bord latéral 46, de son bord médial 47, et au niveau de son extrémité arrière 44. En conséquence le semelage externe 2 présente une lèvre périphérique souple 92, laquelle longe le côté latéral 6, l'extrémité arrière 4, et le côté médial 7. Bien entendu la lèvre est une subdivision de la couverture 40. Cette lèvre 92 est une subdivision continue du semelage 2, mais elle pourrait alternativement être fragmentée. La lèvre s'étend sur une longueur comprise entre 70 et 100% de la périphérie du semelage 2. Par sa souplesse, la lèvre 92 du semelage 2 améliore l'application du semelage 2 sur le reste de la chaussure, comme on le comprend à l'aide de la figure 10.

Il s'agit d'une phase finale de fabrication. La chaussure 1, qui comprend ici un quartier latéral 93, un quartier médial 94, et une semelle première de montage 95, est emboîtée sur une forme 96. Le semelage externe 2 est appliqué sur la forme 96, au moyen d'un outil 100, pour couvrir la première de montage 95 et les portions adjacentes des quartiers latéral 93 et médial 94. Une couche de colle 101 est disposée entre le semelage 2 et le reste de la chaussure 1. La souplesse de la couverture 40 et, par corollaire, la souplesse de la lèvre 92, permet au semelage externe 2 d'épouser fidèlement les courbures de la première de montage 95 et des quartiers 93, 94. Ainsi l'adhérence du semelage 2 au reste de la chaussure 1 est meilleure. Cette dernière est plus solide. On remarque qu'un joint souple 102 est placé dans l'outil 100 pour appuyer sur la lèvre 92. La souplesse du joint 102 permet à l'outil 100 de fonctionner malgré les tolérances de fabrication.

Dans tous les cas l'invention est réalisée à partir de matériaux et selon des techniques de mise en oeuvre connus de l'homme du métier.

Bien entendu l'invention n'est pas limitée à la forme de réalisation ci-avant décrite, et comprend tous les équivalents techniques pouvant entrer dans la portée des revendications qui vont suivre.

En particulier de nombreuses variantes de structures peuvent être prévues pour les bossages ou les cavités.

Les matières constitutives de l'âme 15 et de la couverture 40 peuvent être de genres différents. Cela signifie que leurs formulations chimiques sont différentes. Les matières peuvent être sélectionnées pour que l'une adhère à l'autre lors du moulage.

Il pourrait aussi être prévu d'utiliser trois matériaux ou plus pour la réalisation du semelage externe.

Il peut encore être prévu que l'âme 15 soit fragmentée, ce qui fait par corollaire que la subdivision longitudinale 91 est fragmentée.

## Revendications

1. Chaussure (1) comprenant un semelage externe (2), le semelage externe (2) s'étendant en longueur depuis une extrémité arrière (4) jusqu'à une extrémité avant (5), en largeur entre un côté latéral (6) et un côté médial (7), et en hauteur entre une face libre (8) et une face de liaison (9), le semelage externe (2) comprenant :
- une âme (15) en un premier matériau, l'âme (15) du semelage externe (2) comprenant une plaque (16) qui délimite la face de liaison (9), ainsi qu'au moins un bossage (21-37) qui fait saillie depuis la plaque (16) vers la face libre (8),
- une couverture (40) en un deuxième matériau, la couverture délimitant en partie au moins la face libre (8), la couverture (40) couvrant en partie au moins la plaque (16) et en partie au moins un bossage (21-37), le matériau de l'âme présentant une dureté supérieure à celle du matériau de la couverture,
- un organe de liaison (61) prévu pour coopérer avec un dispositif de retenue de la chaussure sur un engin de sport, au niveau de l'avant de la chaussure, la couverture (40) prolongeant l'âme (15) au niveau de son bord latéral (46), de son bord médial (47) et de son extrémité arrière (44) de sorte à former une partie d'une lèvre périphérique souple (92) du semelage externe (2), et **caractérisée en ce que** l'organe de liaison est directement ancré de manière solide dans l'âme (15).

2. Chaussure (1) selon la revendication 1, **caractérisée par le fait que** la couverture (40) s'étend parallèlement à la plaque (16) pour élargir le semelage (2) au niveau du côté latéral (6) et au niveau du côté médial (7).

3. Chaussure (1) selon l'une des revendications précédentes, **caractérisée par le fait que** la lèvre périphérique (92) est une subdivision de la couverture (40) s'étendant sur une longueur comprise entre 70 et 100% de la périphérie du semelage (2).

4. Chaussure (1) selon l'une des revendications précédentes, **caractérisée par le fait que** la couverture (40) couvre en partie au moins la plaque (16).

5. Chaussure (1) selon l'une des revendications précédentes, **caractérisée par le fait que** l'âme (15) présente une longueur comprise entre 85 et 100% de la longueur du semelage (2).

6. -Chaussure (1) selon l'une des revendications précédentes, **caractérisée par le fait que** la lèvre périphérique (92) longe le côté latéral (6), l'extrémité arrière (4), et le côté médial (7).

7. -Chaussure (1) selon l'une des revendications précédentes, **caractérisée par le fait que** le long du semelage (2) s'étend une bande (91), laquelle présente une longueur comprise entre 85 et 100% de la longueur du semelage (2), la bande (91) étant une subdivision de la plaque (16).

8. -Chaussure (1) selon l'une des revendications précédentes, **caractérisée par le fait que** les bossages (21 à 37) sont au nombre de neuf vers un bord latéral (46) de l'âme (15), et au nombre de huit vers un bord médial (47) de l'âme (15).

9. -Chaussure (1) selon l'une des revendications précédentes, **caractérisée par le fait que** les bossages avant (29, 37) sont nus, et **par le fait qu'**elle comprend un deuxième organe de liaison (62), au niveau d'un bossage latéral (27) et d'un bossage médial (35) d'une zone de métatarse (53).

10. -Chaussure (1) selon l'une des revendications précédentes, **caractérisée par le fait que** les bossages arrière (21 à 23, 30 à 32) sont totalement recouverts par la couverture (40).

11. -Chaussure (1) selon l'une des revendications précédentes, **caractérisée par le fait que** les bossages (24 à 26, 33, 34) de la zone de métatarse (53) sont partiellement recouverts par la couverture (40).

12. -Chaussure (1) selon l'une des revendications précédentes, **caractérisée par le fait qu'**elle présente des cavités ouvertes (71 à 87), qui débouchent du côté de la face de liaison (9).

13. -Chaussure (1) selon l'une des revendications précédentes, **caractérisée par le fait que** la répartition des bossages (21 à 37) délimite une rainure longitudinale (55) du semelage (2), qui débouche au niveau de la face libre (8).

## Patentansprüche

1. Schuh (1), welcher einen äußeren Sohlenaufbau (2) umfasst, wobei sich der äußere Sohlenaufbau (2) in der Länge von einem hinteren Ende (4) bis zu einem vorderen Ende (5), in der Breite zwischen einer lateralen Seite (6) und einer medialen Seite (7) und in der Höhe zwischen einer freien Seite (8) und einer Verbindungsseite (9) erstreckt, wobei der äußere Sohlenaufbau (2) umfasst:
- einen Kern (15) aus einem ersten Material, wobei der Kern (15) des äußeren Sohlenaufbaus (2) eine Platte (16), welche die Verbindungsseite (9) begrenzt, sowie wenigstens eine Erhebung (21-37), welche von der Platte (16) zu der freien Seite (8) hin vorsteht, umfasst;
- eine Abdeckung (40) aus einem zweiten Material, wobei die Abdeckung wenigstens teilweise die freie Seite (8) begrenzt, wobei die Abdeckung (40) wenigstens teilweise die Platte (16) und wenigstens teilweise eine Erhebung (21-37) bedeckt, wobei das Material des Kerns eine Härte aufweist, die größer als diejenige des Materials der Abdeckung ist,
- ein Verbindungsorgan (61), das dazu vorgesehen ist, mit einer Vorrichtung zum Halten des Schuhs auf einem Sportgerät zusammenzuwirken,
am Vorderteil des Schuhs,
wobei die Abdeckung (40) den Kern (15) an seinem seitlichen Rand (46), seinem medialen Rand (47) und seinem hinteren Ende (44) verlängert, derart, dass sie einen Teil einer flexiblen Umfangslippe (92) des äußeren Sohlenaufbaus (2) bildet,
und **dadurch gekennzeichnet, dass** das Verbindungsorgan direkt fest im Kern (15) verankert ist.

2. Schuh (1) nach Anspruch 1, **dadurch gekennzeichnet, dass** sich die Abdeckung (40) parallel zu der Platte (16) erstreckt, um den Sohlenaufbau (2) an der lateralen Seite (6) und an der medialen Seite (7) zu verbreitern.

3. Schuh (1) nach einem der vorhergehenden Ansprüche, **dadurch gekennzeichnet, dass** die Umfangslippe (92) ein Teilabschnitt der Abdeckung (40) ist, der sich auf einer Länge zwischen 70 und 100 % des Umfangs des Sohlenaufbaus (2) erstreckt.

4. Schuh (1) nach einem der vorhergehenden Ansprüche, **dadurch gekennzeichnet, dass** die Abdeckung (40) wenigstens teilweise die Platte (16) bedeckt.

5. Schuh (1) nach einem der vorhergehenden Ansprüche, **dadurch gekennzeichnet, dass** der Kern (15) eine Länge aufweist, die zwischen 85 und 100 % der Länge des Sohlenaufbaus (2) beträgt.

6. Schuh (1) nach einem der vorhergehenden Ansprüche, **dadurch gekennzeichnet, dass** die Umfangslippe (92) entlang der lateralen Seite (6), des hinteren Endes (4) und der medialen Seite (7) verläuft.

7. Schuh (1) nach einem der vorhergehenden Ansprüche, **dadurch gekennzeichnet, dass** sich entlang des Sohlenaufbaus (2) ein Streifen (91) erstreckt, welcher eine Länge aufweist, die zwischen 85 und 100 % der Länge des Sohlenaufbaus (2) beträgt, wobei der Streifen (91) ein Teilabschnitt der Platte (16) ist.

8. Schuh (1) nach einem der vorhergehenden Ansprüche, **dadurch gekennzeichnet, dass** die Anzahl der Höcker (21 bis 37) neun nahe einer lateralen Seite (46) des Kerns (15) und acht nahe einer medialen Seite (47) des Kerns (15) beträgt.

9. Schuh (1) nach einem der vorhergehenden Ansprüche, **dadurch gekennzeichnet, dass** die vorderen Erhebungen (29, 37) unbedeckt sind, und dadurch, dass er ein zweites Verbindungsorgan (62) an einer lateralen Erhebung (27) und einer medialen Erhebung (35) eines Mittelfußbereichs (53) umfasst,

10. Schuh (1) nach einem der vorhergehenden Ansprüche, **dadurch gekennzeichnet, dass** die hinteren Erhebungen (21 bis 23, 30 bis 32) vollständig von der Abdeckung (40) bedeckt sind.

11. Schuh (1) nach einem der vorhergehenden Ansprüche, **dadurch gekennzeichnet, dass** die Erhebungen (24 bis 26, 33, 34) des Mittelfußbereichs (53) teilweise von der Abdeckung (40) bedeckt sind.

12. Schuh (1) nach einem der vorhergehenden Ansprüche, **dadurch gekennzeichnet, dass** er offene Hohlräume (71 bis 87) aufweist, welche auf der Seite der Verbindungsseite (9) münden.

13. Schuh (1) nach einem der vorhergehenden Ansprüche, **dadurch gekennzeichnet, dass** die Verteilung der Erhebungen (21 bis 37) eine Längsrille (55) des Sohlenaufbaus (2) begrenzt, welche an der freien Seite (8) mündet.

## Claims

1. Shoe (1) comprising an external bottom assembly (2), the external bottom assembly (2) extending in terms of length between a rear end (4) and a front end (5), in terms of width between a lateral side (6) and a medial side (7), and in terms of height between a free face (8) and a connecting face (9), the external bottom assembly (2) comprising:
- a core (15) made of a first material, the core (15) of the external bottom assembly (2) comprising a sheet (16) which delimits the connecting face (9), and also at least one boss (21-37) which protrudes from the sheet (16) towards the free face (8),
- a cover (40) made of a second material, the cover delimiting part of at least the free face (8), the cover (40) covering part of at least the sheet (16) and part of at least one boss (21-37), the material of the core being harder than the material of the cover,
- a connecting member (61) provided to cooperate with a device for retaining the shoe on a sports device,
at the front of the shoe, the cover (40) extending the core (15) at its lateral edge (46), its medial edge (47) and its rear end (44) so as to form a part of a flexible peripheral lip (92) of the external bottom assembly (2), and **characterized in that** the connecting member is securely anchored directly in the core (15).

2. Shoe (1) according to Claim 1, **characterized in that** the cover (40) extends parallel to the sheet (16) in order to widen the bottom assembly (2) at the lateral side (6) and at the medial side (7).

3. Shoe (1) according to either of the preceding claims, **characterized in that** the peripheral lip (92) is a subdivision of the cover (40) extending over a length of between 70 and 100% of the periphery of the bottom assembly (2).

4. Shoe (1) according to one of the preceding claims, **characterized in that** the cover (40) covers a part of at least the sheet (16).

5. Shoe (1) according to one of the preceding claims, **characterized in that** the core (15) has a length of between 85 and 100% of the length of the bottom assembly (2).

6. Shoe (1) according to one of the preceding claims, **characterized in that** the peripheral lip (92) borders the lateral side (6), the rear end (4) and the medial side (7).

7. Shoe (1) according to one of the preceding claims, **characterized in that** a strip (91) extends along the bottom assembly (2), said strip (91) having a length of between 85 and 100% of the length of the bottom assembly (2), the strip (91) being a subdivision of the sheet (16).

8. Shoe (1) according to one of the preceding claims, **characterized in that** there are nine bosses (21 to 37) towards a lateral edge (46) of the core (15), and there are eight thereof towards a medial edge (47) of the core (15).

9. Shoe (1) according to one of the preceding claims, **characterized in that** the front bosses (29, 37) are uncovered, and **in that** it comprises a second connecting member (62), at a lateral boss (27) and a medial boss (35) of a metatarsal zone (53).

10. Shoe (1) according to one of the preceding claims, **characterized in that** the rear bosses (21 to 23, 30 to 32) are completely covered by the cover (40).

11. Shoe (1) according to one of the preceding claims, **characterized in that** the bosses (24 to 26, 33, 34) in the metatarsal zone (53) are partially covered by the cover (40).

12. Shoe (1) according to one of the preceding claims, **characterized in that** it has open cavities (71 to 87) which open out on the side of the connecting face (9).

13. Shoe (1) according to one of the preceding claims, **characterized in that** the distribution of the bosses (21 to 37) delimits a longitudinal groove (55) in the bottom assembly (2), which opens out at the free face (8) .
